# EUROPÄISCHE PATENTSCHRIFT

(11) **EP 1 101 741 B1**
(45) Veröffentlichungstag und Bekanntmachung des Hinweises auf die Patenterteilung: **13.07.2005**
(21) Anmeldenummer: 00123504.3
(22) Anmeldetag: 27.10.2000
(51) Int. Cl.: C03C 3/06, C03B 19/14, C03C 4/00

(54) **Quarzglaskörper für ein optisches Bauteil und Verfahren zu seiner Herstellung**
Quartz glass product for an optical element and process of its manufacture
Corp en verre de quartz pour un élément optique et procédé de sa fabrication

(30) Priorität: 15.11.1999 DE 19954759; 04.02.2000 DE 10005051
(43) Veröffentlichungstag der Anmeldung: 23.05.2001
(73) Patentinhaber: Heraeus Quarzglas GmbH & Co. KG, 63450 Hanau (DE)
(72) Erfinder: Uebbing, Bruno, Dr., 63755 Alzenau (DE); Vydra, Jan, Dr., 63456 Hanau (DE)

(56) Entgegenhaltungen:
- EP-A- 0 546 196
- EP-A- 0 691 312
- WO-A-00/39038
- WO-A-00/48046
- DE-A- 19 942 443
- US-A- 5 668 067
- PATENT ABSTRACTS OF JAPAN vol. 1999, no. 9, 30. Juli 1999 (1999-07-30) & JP 11 116255 A (NIKON CORP), 27. April 1999 (1999-04-27)
- PATENT ABSTRACTS OF JAPAN vol. 1996, no. 7, 31. Juli 1996 (1996-07-31) -& JP 08 081226 A (TOSOH CORP), 26. März 1996 (1996-03-26)
- PATENT ABSTRACTS OF JAPAN vol. 1995, no. 11, 26. Dezember 1995 (1995-12-26) -& JP 07 215731 A (SHIN-ETSU QUARTZ PROD CO LTD), 15. August 1995 (1995-08-15)
- PATENT ABSTRACTS OF JAPAN vol. 1999, no. 4, 30. April 1999 (1999-04-30) & JP 11 001331 A (ASAHI GLASS CO LTD), 6. Januar 1999 (1999-01-06)
- PATENT ABSTRACTS OF JAPAN vol. 96, no. 11, 29. November 1996 (1996-11-29) & JP 08 183621 A (TOSOH CORP), 16. Juli 1996 (1996-07-16)
- PATENT ABSTRACTS OF JAPAN vol. 17, no. 591, 28. Oktober 1993 (1993-10-28) & JP 05 178632 A (ASAHI GLASS CO LTD), 20. Juli 1993 (1993-07-20)

## Beschreibung

Die Erfindung betrifft ein Verfahren zur Herstellung eines Quarzglaskörpers für ein optisches Bauteil für die Übertragung ultravioletter Strahlung einer Wellenlänge von 250 nm und kürzer, insbesondere für eine Wellenlänge von 157 nm, mit einem OH-Gehalt von nicht mehr als 10 Gew.-ppm, mit einer Glasstruktur im wesentlichen ohne Sauerstoffdefektstellen und mit einer Grundtransmission im Wellenlängenbereich zwischen 155 nm und 250 nm bei einer Durchstrahlungslänge von 10 mm von mindestens 80, wobei feine Quarzglasteilchen durch Flammenhydrolyse einer Siliziumverbindung gebildet, abgeschieden und verglast werden.

Optische Bauteile aus synthetischem Quarzglas werden insbesondere für die Übertragung energiereicher, ultravioletter Laserstrahlung eingesetzt, beispielsweise in Belichtungsoptiken in Mikrolithographiegeräten für die Herstellung hochintegrierter Schaltungen in Halbleiterchips. Moderne Mikrolithographiegeräte arbeiten mit Excimerlasern, die energiereiche, gepulste UV-Strahlung einer Wellenlänge von 248 nm (KrF-Laser), von 193 nm (ArF-Laser) oder von 157 nm (F₂-Laser) abgeben. Bei derart kurzwelliger UV-Strahlung kommen in den optischen Bauteilen aus Quarzglas jedoch strukturelle Defekte und damit einhergehende Absorptionen zum Tragen, die für Art und Qualität des jeweiligen Quarzglaskörpers charakteristisch sind.
Die Eignung eines Quarzglases im Sinne hoher Grundtransmission und Strahlenbeständigkeit hängt von seinen strukturellen Eigenschaften, die durch lokale Stöchiometrieabweichungen verursacht sind, und von seiner chemischen Zusammensetzung ab. Beispielsweise kann eine hohe Wasserstoffkonzentration zum Ausheilen von Defekten und damit zu einem langsameren Anstieg der strahleninduzierten Absorption beitragen. Es hat sich gezeigt, dass trotz ähnlicher chemischer oder struktureller Eigenschaften des Quarzglases die Eignung als optisches Bauteil verschieden sein kann, wenn das Quarzglas nach unterschiedlichen Herstellungsverfahren erhalten worden ist. Andererseits können zwar chemische und strukturelle Unterschiede vorhanden sein, diese können aber nicht eindeutig die zu beobachtende Transmission oder dem Schädigungsverhalten im Einsatz zugeordnet werden.

Ein gattungsgemäßes Verfahren für die Herstellung eines optischens Bauteils für die Übertragung von UV-Strahlung einer Wellenlänge von weniger als 250 nm ist beispielsweise aus EP 691 312 A1 bekannt. Das darin beschriebene Bauteil wird aus einem vierstufigen Verfahren erhalten, in dem zunächst ein poröser Sootkörper mittels einer Halogenverbindung (Fluor- oder Chlorverbindung) dotiert bzw. dehydriert wird, was den gewünschten geringen OH-Gehalt im Glas einstellt. Dieser Sootkörper wird danach verglast und anschließend (im verglasten Zustand) mit Wasserstoff und/oder Sauerstoff behandelt. Die Behandlung des verglasten Quarzglaskörpers unter Wasserstoff bzw. Sauerstoff erfolgt bei relativ niedriger Temperatur (maximal 500°C) und kann daher nur in einem Oberflächenbereich geringer Tiefe des Quarzglaskörpers wirksam werden, da die Diffusionsgeschwindigkeit von Wasserstoff oder Sauerstoff in verglastem Quarzglas sehr klein ist. Dies führt dazu, daß nur die äußeren Partien eines so hergestellten Quarzglaskörpers die erforderliche Qualität für den Einsatz in sehr kurzwelliger UV-Strahlung zeigen und die Eindringtiefe der Wasserstoff- bzw. Sauerstoff-Dotierung erst durch aufwendige Analysenmethoden ermittelt werden muß. Das Verfahren gemäß EP 691 312 A1 ist daher keineswegs wirtschaftlich.

Die Absorption von Quarzglas wird im Wellenlängenbereich zwischen 140 und 200 nm im wesentlichen durch die sogenannte Urbach-Kante (drastisch zunehmende Absorption unterhalb ca. 155nm ; siehe: I.T. Godmanis, A.N. Trukhin, K. Hübner ,Exciton-Phonon Interaction in Crystalline and Vitreous SiO₂", Phys. Stat. Sol. (b),116 (1983), 279-287) und die Absorptionsbande der Sauerstofffehlstelle (ODC I Bande bei 164 nm, siehe: L. Skuja, ,Optically active oxygendeficiency-related centers in amorphous silicon dioxide", Journal of Non-Crystalline Solids, 239 (1998), 16-48) bedingt. Aus diesem Grund ist es nötig, die Absorptionskante zu möglichst kurzen Wellenlängen zu schieben, sowie die Konzentration von Sauerstofffehlstellen möglichst gering zu halten.

Eine zusätzliche Absorptionsbande (bei ca. 160 nm) wird im Quarzglas durch den OH-Gehalt verursacht. Bei Erhöhung des OH-Gehaltes wird diese in Richtung längerer Wellenlängen verschoben (H. Imai, K. Arai, H. Hosono, Y. Abe, T. Arai, H. Imagawa, "Dependence of defects induced by excimer laser on intrinsic structural defects in synthetic glasses", Phys. Rev. B, 44 (1991), 4812-4817). Ein daher wünschenswerter, niedriger OH-Gehalt kann beispielsweise durch Heißbehandlung eines porösen Sootkörpers aus synthetischem Quarzglas mit einer Halogenverbindung erreicht werden. Im Quarzglas mit niedrigem OH-Gehalt tritt jedoch eine weitere Absorptionsbande auf, die auf der Sauerstofffehlstelle vom Typ ≡Si-Si≡ beruht. Durch eine Behandlung mit Wasserstoff bzw. Sauerstoff kann diese Bindung und somit die ODC I Absorptionsbande bei 164 nm nach folgenden Reaktionsmechanismen beseitigt werden:

≡Si-Si≡ + H₂ → ≡Si-H + H-Si≡ (1)

bzw.

≡Si-Si≡ + ½ O₂ → ≡Si-O-Si≡ (2)

Der vorliegenden Erfindung liegt daher die Aufgabe zugrunde, ein rationelles, wirtschaftlich effektives Verfahren zur Herstellung eines derartigen Quarzglaskörpers anzugeben, das die Nachteile des Standes der Technik überwindet und den volumenmäßigen Einbau von Sauerstoff oder Wasserstoff im Quarzglas ermöglicht.

Die Aufgabe wird erfindungsgemäß mit einem Verfahren gelöst, das die folgenden Schritte umfasst:
a) Hydrolisieren einer Silizium-Verbindung in einer Flamme, wobei feine Quarzglasteilchen entstehen,
b) Abscheiden der feinen Quarzglasteilchen auf einem Träger unter Bildung eines porösen Sootkörpers,
c) Heißbehandeln des Sootkörpers aus Schritt b) in mindestens 2 Teilschritten im Temperaturbereich von 850°C bis 1600°C, wobei der letzte Teilschritt eine Sinterung in einem Temperaturbereich zwischen1300°C und 1600 °C unter einer Atmosphäre, die Wasserstoff oder Sauerstoff oder eine Kombination dieser Stoffe als nicht zündfähiges Gemisch enthält, umfasst.

Das erfindungsgemäße Verfahren gewährleistet einerseits durch die Behandlung des porösen Sootkörpers mit einem Halogen oder einer Halogenverbindung einen niedrigen OH-Gehalt und andererseits einen volumenmäßigen Einbau von Sauerstoff bzw. Wasserstoff in das Quarzglasnetzwerk, um auf diese Weise die im fraglichen Wellenlängenbereich kleiner 250 nm, insbesondere kleiner 200 nm, auftretende Absorptionsbande(n), zu vermeiden. Zur Herstellung eines gattungsgemäßen Quarzglaskörpers haben sich Verfahrensweisen durchgesetzt, die als VAD-Verfahren (vapor-phase deposition; axiale Abscheidung aus der Dampfphase) oder OVD Verfahren (outside vapor-phase deposition; Außenabscheidung auf einen hochtemperaturstabilen Trägerstab aus der Dampfphase) bezeichnet werden. In beiden Fällen wird zunächst ein poröser Rohling (Sootkörper) aus synthetischem Quarzglas erzeugt, indem durch Flammenhydrolyse einer siliziumhaltigen Verbindung SiO₂-Partikel auf einem Substrat abgeschieden werden. Daran schließt sich erfindungsgemäß eine Heißbehandlung des Sootkörpers an, der für die Qualität des dadurch erhältlichen Quarzglaskörpers im Hinblick auf den benötigten niedrigen OH-Gehalt sowie den volumenmäßigen Einbau von Sauerstoff bzw. Wasserstoff in das Quarzglasnetzwerk von entscheidender Bedeutung ist. Das erfindungsgemäße Verfahren ist wirtschaftlich besonders effektiv, da zusätzlich zum volumenmäßigen Einbau von Sauerstoff oder Wasserstoff während eines Heißbehandlungsschritts auch durch die Behandlung mit Halogen ein Dehydrierung des Sootkörpers im Sinne eines möglichst geringen OH-Gehaltes ermöglicht wird. Die Heißbehandlung, die in einem dementsprechend mit Vomchtungen zur Gasführung ausgestatteten Ofen erfolgt, unterteilt sich in mindestens zwei Teilschritte, wobei der letzte Teilschritt eine Sinterung umfaßt, was allmählich zur Verglasung des porösen Sootkörpers führt. Die Sinterung erfolgt im Temperaturbereich zwischen 1300°C und 1600°C, wobei ein kontinuierlicher Übergang zu einem dichten Glas erfolgt. Anfänglich ist der Sootkörper auch in der Sinterphase noch porös.

Vorteilhafte Ausgestaltungen des Verfahrens sind in den Unteransprüchen aufgeführt.

Als zweckmäßig hat sich eine Variante der Gasbeaufschlagung während der Heißbehandlung erwiesen. Diese Möglichkeit kennzeichnet sich dadurch aus, dass während des ersten Teilschrittes der Heißbehandlung die Atmosphäre Halogen und Wasserstoff oder Halogen und Sauerstoff enthält. Unter Halogen im Sinne der Erfindung soll auch eine Halogen enthaltende Verbindung verstanden werden. Beimischungen eines Inertgases stören das Verfahren und die Wirkungsweisen der vorgenannten Gase nicht. Unter den Halogenen bzw. Halogenverbindungen haben sich Fluor- oder Chlorverbindungen als zweckmäßig erwiesen, wobei in der Regel reines Chlorgas (Cl₂), Salzsäure (HCI), Siliziumtetrachlorid (SiCl₄) bzw. Fluorgas (F₂), Schwefelhexafluorid (SF₆) oder Hexafluorethan (F₃CCF₃) zum Einsatz kommen. Die angegebenen Varianten in der Gasführung haben sich als vorteilhaft erwiesen, weil dadurch die Reaktionen gemäß der Reaktiongleichungen (1) bzw. (2) besonders leicht ablaufen. Der Einsatz (Verbrauch) der Reaktionsgase erfolgt dementsprechend wirtschaftlich effektiv.

Was die Temperatur während der Heißbehandlung betrifft, so erfolgt diese im Bereich zwischen 850°C und1600°C. Für den ersten Teilschritt der Heißbehandlung hat es sich jedoch als vorteilhaft erwiesen diesen in einem Temperaturbereich zwischen 850°C und 1300°C ablaufen zu lassen, da hierbei noch keine nennenswerte Verdichtung des Sootkörpers zu beobachten ist und dadurch die Einwirkung der zugeführten Gase auch auf die innere Oberfläche (im Volumen) des Sootkörpers besonders effektiv ist. Ein Sinterung bzw. Verglasung setzt erst oberhalb von etwa 1300°C langsam ein und findet bei einer dauerhaften Temperatur von etwa 1550°C bis 1600 °C langsam seinen Abschluss.

Zu einer weiteren Verbesserung hinsichtlich der Homogenität des herzustellenden Quarzglaskörpers kann ein zusätzlicher Verfahrensschritt d) beitragen, der eine Umformung und gegebenenfalls eine Temperung des Quarzglaskörpers beinhaltet. Die Umformung kann beispielsweise das Aufheizen des Quarzglaskörpers in einer Form unter Eigengewicht oder unter Aufbringen von zusätzlichem Druck (Druckstempel) umfassen. Ebenso kann eine verbesserte Homogenisierung dadurch erfolgen, dass der länglich ausgebildete Quarzglaskörper in eine Glas-Drehbank eingespannt, zonenweise (durch Brenner) erhitzt, -was zur lokalen Erweichung des Quarzglases führt -, und unter einer in Richtung der Längsachse wirkenden Kraft verdrillt wird. Soweit sich mechanische Verspannungen durch die Umformung oder Homogenisierungsbehandlung ausbilden, können diese durch eine nachfolgende Temperung abgebaut werden. Es ist aber auch möglich, dass allein eine Temperung (ohne Homogenisierungsbehandlung) des Quarzglaskörpers erhalten nach den Verfahrensschritten a) bis c) im Temperaturbereich zwischen 900°c und 1200°C zu einer Verbesserung hinsichtlich Homogenität führt.

Mit dem erfindungsgemäßen Verfahren ist es möglich einen Quarzglaskörper zu erhalten, der einen OH-Gehalt von nicht mehr als 10 Gew.-ppm und eine Glasstruktur im wesentlichen ohne Sauerstoffdefektstellen aufweist und dessen Grundtransmission im Wellenlängenbereich zwischen 155 nm und 250 nm bei einer Durchstrahlungslänge von 10 mm mindestens 80 % beträgt, wobei die relative Änderung der Grundtransmission über die nutzbare Fläche des Quarzglaskörpers bei maximal einem Prozent liegt.

Die Eignung als optisches Bauteil ist durch eine Grundtransmission von mindestens 80 % im fraglichen Wellenlängenbereich gegeben, die sich bei einer Glasstruktur im wesentlichen ohne Sauerstoffdefektstellen und bei einem niedrigen OH-Gehalt einstellt. Die hohe Uniformität der Grundtransmission des efindungspemäß herstellbaren Quarzglaskörpers ist durch eine relative Änderung der Transmission von maximal einem Prozent (< 1 %) gekennzeichnet, die sich aus Messungen der Transmission über der nutzbaren Fläche des Quarzglaskörpers ergibt.
Unter der Grundtransmission einer Probe wird die interne Transmission T nach Abzug der Fresnelschen Reflexionsverluste gemäß der Formel T = 10^{-kd} verstanden, wobei k den dekadischen Extinktionskoeffizienten und d die durchstrahlte Länge der Probe bezeichnen.

Ein die vorgenannten Merkmale zeigender Quarzglaskörper ist beispielsweise ein Rohling für ein Spiegelsubstrat oder für ein Maskensubstrat zum Einsatz in der Mikrolithographie, wobei auch für Spiegelsubstrate eine hohe Grundtransmission erforderlich ist, wenn sie beispielsweise als Strahlteiler verwendet werden, deren Reflektiongrad von der Polarisation des einfallenden Lichtes abhängt. Als Spiegelsubstrat allgemein werden Substrate für dielektrische Verspiegelungen bezeichnet, wobei sowohl hochreflektierende als auch teilreflektierende Verspiegelungen auf das Substrat aufgebracht werden. In letzterem Fall ist in der Regel eine hohe Grundtransmission des Spiegelsubstrats unabdingbar.

Soll der Quarzglaskörper als Rohling für eine Linse in einem Mikrolithographiegerät zum Einsatz kommen, werden noch hohere Qualitätsansprüche insbesondere hinsichtlich der Grundtransmission gestellt. Hierbei hat sich eine Grundtransmission von mindestens 95 % als zwecksmäßig erwiesen, wobei außerdem der OH-Gehalt kleiner 10 Gew.-ppm liegt und eine im wesentlichen von Sauerstoffdefektstellen freie Glasstruktur gewährleistet ist.
Die Werte fur die Spannungsdoppelbrechung sind für einen Linsenrohling oder einen ähnlich anspruchsvollen Einsatzzweck in der Optik vorteilhafterweise kleiner 2 nm/cm und die Inhomoqenität im Brechungsindex Δn liegt unter 2 · 10⁻⁶.

Der Grund für die erhöhten Qualitätsansprüche liegt darin, dass durch Inhomogenitäten eines Linsenrohlings nicht korrigierbare Abbildungsfehler erzeugt werden, die die minimale Auflösung eines Lithographiegerätes begrenzen und somit den Einsatz für hochintegrierte Schaltkreise unmöglich machen. An den Rohling für eine Linse werden daher noch höherer Anforderungen in Bezug auf Grundtransmission und Homogenität gestellt als dies beispielsweise für die oben genannten Maskensubstrate der Fall ist.

Die Erfindung wird im folgenden anhand von Ausführungsbeispielen und von Zeichnungen näher beschrieben. Dabei zeigt
- Figur 1: den Verlauf der Transmission im Wellenlängenbereich zwischen 150 nm und 220 nm für nicht optimierte (Kurve A und B) und nach dem erfindungsgemäßen Verfahren hergestellte, optimierte Quarzglaskörper (Kurve C); und
- Figur 2: die Veränderung der normierten Transmission eines Quarzglaskörpers C bei Bestrahlung mit einem F₂-Laser bei bis zu 1 · 10⁸ Pulsen.

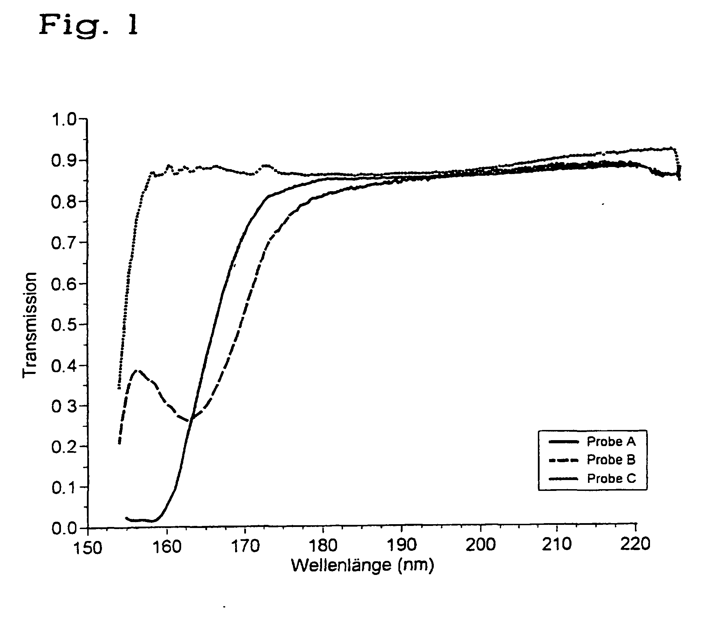

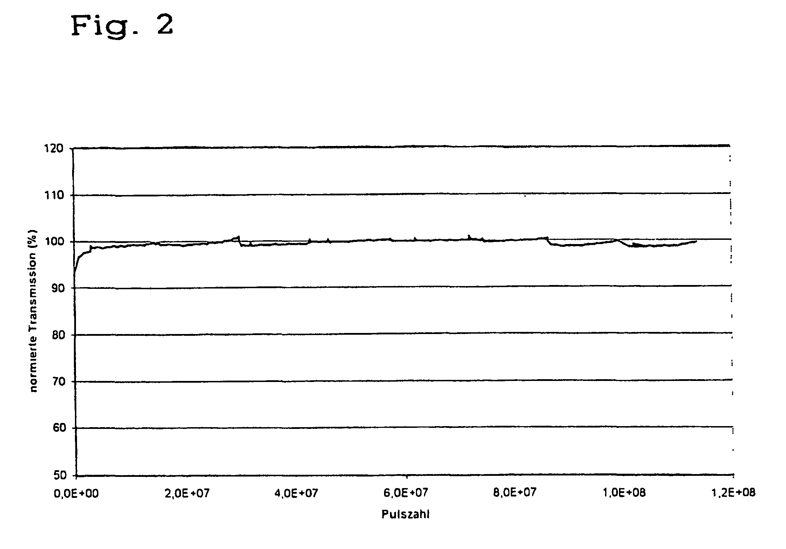

Aus Figur 1 wird deutlich, dass erst der Quarzglaskörper mit dem Transmissionsverlauf gemäß Kurve C befriedigend für den Einsatzzweck ist. Dieser Quarzglaskörper C ist gemäß dem erfindungsgemäßen Verfahren entsprechend den im weiteren beschriebenen Parametern hergestellt. Kurve A repräsentiert eine Quarzglasprobe, die weder einer Halogen- noch eine Sauerstoffbehandlung unterzogen wurde; die Quarzglasprobe bzw. der Quarzglaskörper mit der Kurve B erfuhr während seiner Herstellung zwar eine Halogenbehandlung, was zu einem entsprechend niedrigen OH-Gehalt führte, einhergehend mit der kurzwelligen Bandkante bei 155 nm. Dies führt aber zu erhöhter Absorption im Bereich zwischen 170 und 155 nm , was bei einem optischen Bauteil zum Einsatz in der Mikrolithographie nicht akzeptabel ist. Der Quarzglaskörper mit der Kurve C ist aber demgegenüber für derartige Zwecke geeignet, was sich auch mit der in Figur 2 dargestellten Transmissionskurve bestätigt. Es zeigt sich nämlich, dass sich unter Bestrahlung mit einem F₂-Laser bei sich erhöhender Pulszahl die interne Transmission konstant bleibt, das heißt, dass sich der Quarzglaskörper auch im Dauereinsatz unter kurzwelliger UV-Strahlung durch eine stabil hohe Grundtransmission auszeichnet.

Der so beschaffene Quarzglaskörper wird beispielsweise folgendermaßen hergestellt: Zunächst wird ein poröser SiO₂-Rohling erhalten, indem mittels Flammenhydrolyse von SiCl₄ feinteilige Quarzglasteilchen entstehen, die auf einem Substrat abgeschieden werden. Als Substrat wird ein rotierender Substratteller eingesetzt. Durch die Rotation des Substrattellers und die Steuerung der Abscheidebrenner, über die die Hydrolyse des zugeführten SiCl₄ erfolgt, bilden die abgeschiedenen Quarzglasteilchen nach und nach einen im wesentlichen zylinderformigen porösen Körper (Sootkörper) oder dicken (porösen) Stab. Der so erhaltene poröse Quarzglaskörper wird in einem Ofen eingebracht. Anschließend wird der Ofen im Heliumdurchfluß allmählich auf die Temperatur der ersten Heißbehandlung (Dehydrierphase) erhöht (1000°C). Während der ersten Heißbehandlung wird ein Gemisch aus Hexafluorethan (10 Vol%) und Helium (90 Vol%) über 4 Stunden durch den Ofen geleitet. Im Anschluss wird die Ofentemperatur auf 1350°C (Sinterphase) erhöht und reiner Sauerstoff durch den Ofen geleitet. Während dieser 12 Stunden dauernden Phase wird der noch poröse Sootkörper im Zonensinterverfahren zu einem massiven Quarzglaskörper verglast. Nach der Verglasungsphase kühlt der Körper unter Sauerstoff im Ofen auf etwa 150°C ab und kann zur Weiterverarbeitung entnommen werden. Eine mögliche Weiterverarbeitung kann eine Homogenisierungsbehandlung mittels Temperung des Quarzglaskörpers umfassen. Dazu wird der Quarzglaskörper für etwa 20 Stunden bei 1150°C gehalten, anschließend mit einer Abkühlrate von 10 °C pro Stunde auf zunächst 900°C abgekühlt. Danach wird der Temperofen ausgeschaltet und der Quarzglakörper verbleibt im Temperofen bis dieser auf natürliche Weise auf Raumtemperatur abgekühlt ist. Zur Überprüfung der Eigenschaften des so hergestellten Quarzglaskörpers wird aus diesem ein Probekörper herausgeschnitten und hinsichtlicher seiner optischen Eigenschaften vermessen. Es ergeben sich die mit Figur 1 Kurve C und Figur 2 dargestellten Merkmale in Bezug auf die Transmission.

## Patentansprüche

1. Verfahren zur Herstellung eines Quarzglaskörpers für ein optisches Bauteil zur Übertragung ultravioletter Strahlung einer Wellenlänge von 250 nm und kürzer, insbesondere für eine Wellenlänge von 157 nm, mit einem OH-Gehalt von nicht mehr als 10 Gew.-ppm, mit einer Glasstruktur im wesentlichen ohne Sauerstoffdefektstellen und mit einer Grundtransmission im Wellenlängenbereich zwischen 155 nm und 250 nm bei einer Durchstrahlungslänge von 10 mm von mindestens 80 %, wobei das Verfahren die folgenden Schritte umfasst:
a) Hydrolisieren einer Silizium-Verbindung in einer Flamme, wobei feine Quarzglasteilchen entstehen,
b) Abscheiden der feinen Quarzglasteilchen auf einem Träger unter Bildung eines porösen Sootkörpers,
c) Heißbehandeln des Sootkörpers aus Schritt b) in mindestens 2 Teilschritten im Temperaturbereich von 850°C bis 1600°C, wobei der letzte Teilschritt eine Sinterung in einem Temperaturbereich zwischen 1300°C und 1600 °C unter einer Atmosphäre, die Wasserstoff oder Sauerstoff oder eine Kombination dieser Stoffe als nicht zündfähiges Gemisch enthält, umfasst.

2. Verfahren zur Herstellung eines Quarzglaskörpers für ein optisches Bauteil nach Anspruch 1, **dadurch gekennzeichnet, dass** während des ersten Teilschritts der Heißbehandlung die Atmosphäre Halogen und Wasserstoff oder Halogen und Sauerstoff enthält.

3. Verfahren zur Herstellung eines Quarzglaskörpers für ein optisches Bauteil nach Anspruch 1 oder 2, **dadurch gekennzeichnet, dass** das während der Heißbehandlung zugeführte Halogen eine Fluor- bzw. Chlorverbindung umfasst.

4. Verfahren zur Herstellung eines Quarzglaskörpers für ein optisches Bauteil nach einem der Ansprüche 1 bis 3, **dadurch gekennzeichnet, dass** der erste Teilschritt der Heißbehandlung in einem Temperaturbereich zwischen 850°C und 1300°C erfolgt.

5. Verfahren zur Herstellung eines Quarzglaskörpers für ein optisches Bauteil nach einem der Ansprüche 1 bis 4, **dadurch gekennzeichnet, dass** als zusätzlicher Verfahrensschritt d) der Quarzglaskörper durch Umformung und/oder Temperung homogenisiert wird.

6. Verfahren zur Herstellung eines Quarzglaskörpers für ein optisches Bauteil nach Anspruch 5, **dadurch gekennzeichnet, dass** die Temperung in einem Temperaturbereich zwischen 900°C und 1200°C erfolgt.

## Claims

1. A process for manufacturing a quartz glass product for an optical element for transmitting ultraviolet radiation of a wavelength of 250 nm and shorter, particularly for a wavelength of 157 nm, with an OH content of not more than 10 wt ppm, with a glass structure essentially without oxygen defects and with a basic transmission in the wavelength range between 155 nm and 250 nm at a through-transmission length of 10 mm of at least 80%, the process comprising the following steps:
a) hydrolyzing a silicon compound in a flame, thereby forming fine quartz glass particles,
b) depositing the fine quartz glass particles on a carrier with formation of a porous soot body,
c) heat treatment of the soot body from step b) in at least 2 partial steps within a temperature range of 850°C to 1600°C, the last partial step comprising sintering within a temperature range between 1300°C and 1600°C in an atmosphere containing hydrogen or oxygen or a combination of said substances as a non-ignitable mixture.

2. The process for manufacturing a quartz glass product for an optical element according to claim 1, **characterized in that** in the first partial step of the heat treatment the atmosphere contains halogen and hydrogen or halogen and oxygen.

3. The process for manufacturing a quartz glass product for an optical element according to claim 1 or 2, **characterized in that** the halogen supplied during heat treatment comprises a fluorine or chlorine compound.

4. The process for manufacturing a quartz glass product for an optical element according to any one of claims 1 to 3, **characterized in that** the first partial step of the heat treatment is carried out within a temperature range between 850°C and 1300°C.

5. The process for manufacturing a quartz glass product for an optical element according to any one of claims 1 to 4, **characterized in that** as an additional process step d) the quartz glass product is homogenized by shaping and/or annealing.

6. The process for manufacturing a quartz glass product for an optical element according to claim 5, **characterized in that** annealing is carried out within a temperature range between 900°C and 1200°C.

## Revendications

1. Procédé pour la fabrication d'un corps de verre de quartz pour un composant optique pour la transmission du rayonnement ultraviolet d'une longueur d'ondes inférieure ou égale à 250 nm, en particulier pour une longueur d'ondes de 157 nm, avec une teneur en OH égale à maximum à 10 pour cent ppm, avec une structure de verre essentiellement sans défaut d'oxygène et avec une transmission de base dans une plage de longueur d'ondes comprise entre 155 nm et 250 nm pour une longueur de transmission de 10 nm d'au moins 80 %, le procédé comprenant les étapes suivantes :
a) hydrolisation d'une liaison silicium dans une flamme, générant ainsi de fines particules de verre de quartz,
b) précipitation des fines particules de verre de quartz sur un substrat en formant un corps de suie poreux,
c) traitement thermique du corps de suie de l'étape b) dans au moins deux étapes partielles dans la plage de températures comprises entre 850°C et 1600°C, la deuxième étape partielle comprenant un frittage dans une plage de températures entre 1300°C et 1600°C sous une atmosphère qui contient de l'hydrogène ou de l'oxygène ou une combinaison de ces substances sous forme de mélange non inflammable.

2. Procédé pour la fabrication d'un corps de verre de quartz pour un composant optique selon la revendication 1, **caractérisé en ce que** pendant la première étape partielle du traitement thermique l'atmosphère contient de l'halogène et de l'hydrogène ou de l'halogène et de l'oxygène.

3. Procédé pour la fabrication d'un corps de verre de quartz pour un composant optique selon la revendication 1, **caractérisé en ce que** l'halogène amené pendant le traitement thermique comporte un composé de fluor respectivement de chlore.

4. Procédé pour la fabrication d'un corps de verre de quartz pour un composant optique selon l'une des revendications 1 à 3, **caractérisé en ce que** la première étape partielle du traitement thermique s'effectue dans une plage de température entre 850° et 1300°C.

5. Procédé pour la fabrication d'un corps de verre de quartz pour un composant optique selon l'une des revendications 1 à 3, **caractérisé en ce que** dans une étape de procédé supplémentaire, le corps de verre de quartz est homogénéisé par déformation et/ou températion.

6. Procédé pour la fabrication d'un corps de verre de quartz pour un composant optique selon la revendication 5, **caractérisé en ce que** la températion s'effectue dans une plage de températures comprises entre 900°C et 1200°C.
